# EUROPÄISCHE PATENTSCHRIFT

(11) **EP 0 949 810 B1**
(45) Veröffentlichungstag und Bekanntmachung des Hinweises auf die Patenterteilung: **07.11.2007**
(21) Anmeldenummer: 99104510.5
(22) Anmeldetag: 06.03.1999
(51) Int. Cl.: H04N 5/238

(54) **Vorrichtung zur lokalen Abschwächung der Lichtintensität im Sehfeld einer lichtempfindlichen Beobachtungseinrichtung**
Device for local attenuation of the light intensity in the field of view of a light-sensitive observation apparatus
Dispositif d'affaiblissement local de l'intensité lumineuse dans le champ de vue d'un appareil d'observation photosensible

(30) Priorität: 06.04.1998 DE 19815337
(43) Veröffentlichungstag der Anmeldung: 13.10.1999
(73) Patentinhaber: Deutsche Telekom AG, 53113 Bonn (DE)
(72) Erfinder: Dultz, Wolfgang, Prof., 65936 Frankfurt (DE); Beresnev, Leonid, Dr., Columbia, MD 21044 (US)

(56) Entgegenhaltungen:
- EP-A- 0 326 467
- EP-A- 0 803 760
- US-A- 3 944 817
- US-A- 4 272 164
- PATENT ABSTRACTS OF JAPAN vol. 011, no. 207 (P-592), 4. Juli 1987 (1987-07-04) & JP 62 027717 A (NISSAN MOTOR CO LTD), 5. Februar 1987 (1987-02-05)
- PATENT ABSTRACTS OF JAPAN vol. 018, no. 454 (P-1791), 24. August 1994 (1994-08-24) & JP 06 148593 A (CANON INC), 27. Mai 1994 (1994-05-27)

## Beschreibung

Die vorliegende Erfindung betrifft eine Vorrichtung zur lokalen Abschwächung der Lichtintensität im Sehfeld einer lichtempfindlichen Beobachtungs- und/oder Aufzeichnungseinrichtung gemäß den Oberbegriffen der Ansprüche 1 bzw. 2, die insbesondere als Blendschutzvorrichtung für Videokameras in Bildtelefonen oder entsprechend ausgerüsteten PC's einsetzbar ist.

Durch die enormen Fortschritte der modernen Telekommunikationstechnik werden interaktive audiovisuelle Kommunikationen zwischen zwei und mehr Gesprächspartnern per Bildtelefon oder PC bald zu unserem Alltag gehören. Die hierbei verwendeten Endgeräte umfassen neben einem Lautsprecher und einem Mikrofon auch eine Videokamera zur Aufnahme der miteinander kommunizierenden Personen und einen Bildschirm zu deren Darstellung. Sie stehen im allgemeinen in Privaträumen oder Büros, die auf vielfältige Weise genutzt werden und eine sich zeitlich verändernde unterschiedliche Beleuchtung aufweisen.

Die verwendeten Videokameras sind hierbei jeweils gleichzeitig auf die telefonierende Person und deren Hintergrund mit einer eventuell stark wechselnden Beleuchtung gerichtet, der unter Umständen auch sehr helle Lichtquellen, wie z.B. die Sonne oder eine Halogenlampe umfassen kann. Sie werden hierbei natürlich so gesteuert, daß das Bild der telefonierenden Person optimal aufgenommen und auf den Bildschirm des jeweiligen Gesprächspartners übertragen wird. Der Dynamikbereich der Videokameras ist dann aber nicht groß genug, auch die hellen Hintergründe oder Lichtquellen optisch scharf abzubilden. Es entstehen Überstrahlungen, die die Qualität der Abbildung der telefonierenden Person verschlechtern. Zur Lösung dieses Problems erweist sich beispielsweise eine automatische Empfindlichkeitsreduzierung als ungeeignet, da dann das Bild der telefonierenden Person zu dunkel abgebildet wird. Neuerdings werden daher spezielle nichtlineare elektrooptische Bauelemente eingesetzt, die bei schwacher bis mittlerer Beleuchtung örtlich transparent und bei starker oder sehr starker Beleuchtung örtlich lichtundurchlässig sind, so daß helle Lichtquellen stärker abgeschwächt werden als dunkle. Lokale Lichtquellen in einem Bild werden somit ohne Abdunklung des restlichen Bildes abgeblendet.

Bei diesen Bauelementen handelt es sich um optisch adressierbare räumliche Lichtmodulatoren auf Flüssigkristallbasis, wie sie z.B. von M.G. Tomilin, A.P. Onokkow und B.Yu. Polushkin in Mol. Cryst. Lq. Crys., 222, 119 (1992) anhand von Sicherheitsbrillen beschrieben werden. Ausgenützt wird hierbei der Verdrillungseffekt in nematischen Flüssigkristallen als das auf das Licht wirkende Medium. Der grundsätzliche Nachteil der Verwendung nematischer Flüssigkristalle besteht jedoch in der relativ langsamen Schaltzeit, die im Bereich von etwa 10^{"2} s liegt. Dies führt zum Verwackeln oder Verwischen des unterdrückten Bildes während der Bildbewegung von hellen Objekten in den verwendeten Lichtmodulatoren bzw. zur Blendung des Auges oder einer eingesetzten Videokamera.

Die JP 62 027 717 zeigt eine optische Anordnung mit einem CCD-Bildsensor. Über die Signalwerte der einzelnen Pixel wird ein LCD-Filter angesteuert und so eine partielle Abschwächung erreicht.

Die US 3,944,817 zeigt eine Vorrichtung zur Anpassung der Helligkeit. Dabei wird insbesondere ein Filter mit nematischen Flüssigkristallen verwendet.

Die JP 6 148 593 betrifft eine Vorrichtung zur Anpassung der Transmission.

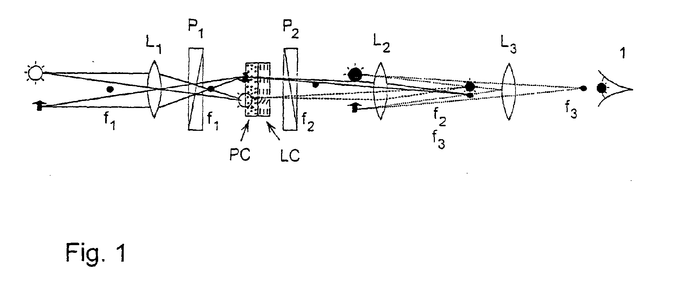

In der deutschen Patentanmeldung 196 16 323.4 von L. Beresnev et al. wird ein ortsauflösender ferroelektrischer Flüssigkristallmodulator mit einer wesentlich höheren Betriebsfrequenz von 10² - 10³ Hz beschrieben, der nicht auf nematischen sondern auf helixförmigen smektischen Flüssigkristallen basiert, die in Kontakt mit einer vorgeschalteten halbtransparenten photoleitenden Schicht stehen (siehe Fig. 1 der vorliegenden Anmeldung und den zugehörigen Beschreibungsteil). Die photoleitende Schicht ist in der Bildebene eines abbildenden Objektivs angeordnet, so daß die Bilder der sich im Sehfeld des Objektivs befindenden Objekte in Spannungsmuster umgewandelt werden, die sich auf die Flüssigkristalle übertragen und diese entsprechend umorientieren. Der zwischen zwei Polarisatoren angeordnete Flüssigkristallmodulator wird damit für niedrige Lichtintensitäten örtlich transparent und für hohe Lichtintensitäten örtlich abgedunkelt, so daß helle Lichtquellen oder Hintergründe lokal unterdrückt werden, ohne daß hierbei eine Blendung oder Überstrahlung des Bildes eintritt.

Die praktische Anwendung dieses Flüssigkristallmodulators wird in den Ausführungsbeispielen lediglich anhand von Brillen beschrieben, bei denen die auf der photoleitenden Schicht entstehenden Bilder im einfachsten Fall zunächst mittels einer Linse so abgebildet werden, daß sie über eine als Lupe wirkende weitere Linse mit dem Auge beobachtbar sind, die so gewählt und angeordnet wird, daß ein virtuelles vergrößertes aufrechtes Bild der zweiten Zwischenabbildung entsteht. Der beschriebene Flüssigkristallmodulator ist mittels eines schaltbaren Verschlusses oder Kompensators optisch ausschaltbar, wenn er in gewissen Zuständen der angelegten Spannungszyklen nicht die gewünschten blendungsverindernden Eigenschaften aufweist.

Die Aufgabe der vorliegenden Erfindung besteht in der Schaffung einer auf einem solchen ferroelektrischen Flüssigkristallmodulator basierenden verbesserten Vorrichtung zur lokalen Abschwächung der Lichtintensität im Sehfeld einer lichtempfindlichen Beobachtungs- und/oder Aufzeichnungseinrichtung, die insbesondere als Blendschutzvorrichtung für Videokameras in Bildtelefonen oder entsprechend ausgerüsteten PC's geeignet ist.

Diese Aufgabe wird erfindungsgemäß dadurch gelöst, daß die bei einer gattungsgemäßen Vorrichtung gemäß dem Oberbegriff des Anspruches 1 entstehende Zwischenabbildung der sich im Sehfeld befindenden Objekte durch ein zweites Objektiv aus einer oder mehreren Linsen von der photoleitenden Schicht des Flüssigkristallmodulators direkt auf die Beobachtungs- und/oder Aufzeichnungseinrichtung abgebildet wird, so daß die im Stand der Technik noch erforderliche zweite Zwischenabbildung entfällt, was zu einer kompakteren, leichteren und kostengünstigeren Blendschutzvorrichtung führt.

Eine andere Lösungsmöglichkeit besteht darin, auf die Zwischenabbildung gemäß Anspruch 1 zu verzichten und die sich im Sehfeld befindenden Objekte mittels eines aus einer oder mehreren Linsen bestehenden Objektivs direkt auf die lichtempfindliche Beobachtungs- und/oder Aufzeichnungseinrichtung abzubilden, die demgemäß im wesentlichen in der Bildebene des Objektivs angeordnet ist. Der ortsauflösende ferroelektrische Flüssigkristallmodulator ist in diesem Fall in großer Nähe vor der Beobachtungs- und/oder Aufzeichnungseinrichtung im Strahlengang des Objektives angeordnet, wobei er sich wiederum zwischen zwei Polarisatoren befindet. Zwischen dem ortsauflösenden Flüssigkristallmodulator und der Beobachtungs- und/oder Aufzeichnungseinrichtung kann eine optische Faserplatte zur besseren Bildübertragung angeordnet werden. Eine entsprechende Vorrichtung ist dem Anspruch 2 zu entnehmen.

Bei dieser Art der Blendschutzvorrichtung werden die Objekte naturgemäß etwas unscharf auf die photoleitende Schicht des Flüssigkristallmodulators abgebildet, so daß helle Störlichtquellen vorteilhafterweise nicht nur abgedunkelt sondern auch verwaschen dargestellt werden. Der Verzicht auf die Zwischenabbildung ermöglicht zudem eine noch wesentlich geringere Baulänge und ein geringeres Gewicht, da das zweite Objektiv ersatzlos enfällt. Da es sich hierbei üblicherweise um ein hochwertiges teueres Objektiv handelt, ist diese erfindungsgemäße Ausführungsform zudem mit einer erheblichen Kostenersparnis verbunden.

Da das einfallende Licht in der photoleitenden Schicht des Flüssigkristallmodulators teilweise absorbiert wird, umfassen beide Ausführungsvarianten vorzugsweise ein Farbfilter, durch das das Licht so in seinen spektralen Anteilen verändert wird, daß die lichtempfindliche Beobachtungs- und/oder Aufzeichnungseinrichtung, bei der es sich vorzugsweise um eine CCD-Kamera handelt, ein farbgetreues Abbild der telefonierenden Person oder eines sonstigen sich im Sehfeld befindenden Objekts liefert. Das vorzugsweise zwischen dem ersten Objektiv und der photoleitenden Schicht angeordnete Farbfilter wirkt also als Farbkorrekturfilter für die Bauteile der Kamera und die Farbverfälschung durch die Farbtemperatur der Lichtquellen und muß entsprechend abgestimmt werden.

Bei Farbkameras wird vorzugsweise unmittelbar vor der lichtempfindlichen Beobachtungs- und/oder Aufzeichnungseinrichtung ein Mosaikfarbfilter angeordnet.

Die beschriebenen Vorrichtungen umfassen zudem vorzugsweise einen optischen Verschluß oder Kompensator zur Unterbrechung des Strahlengangs, wenn der Flüssigkristallmodulator nicht die gewünschten blendungsvermindernden Eigenschaften aufweist, um eventuelle Beschädigungen der lichtempfindlichen Beobachtungs- und/oder Aufzeichnungeeinrichtung durch zu hohe Lichtintensitäten zu verhindern. Der optische Verschluß kann hiebei als schneller ferroelektrischer Flüssigkristallschalter ausgebildet sein, wie er beispielweise in der oben werwähnten deutschen Patentanmeldung 196 16 323.4 von Beresnev et al. beschrieben wird. Er kann aber auch als anderer elektrooptischer oder elektromechanischer Verschluß oder Schalter ausgebildet sein, wie sie bei Fachleuten auf diesem Gebiet bekannt sind. Ein beispielsweise als schaltbare Retardierungsplatte ausgebildete elektrooptische Verschluß ist zwischen zwei Polarisatoren angeordnet, um eine Lichtauslöschung zu erzielen. Der Verschluß kann erfindungsgemäß sowohl zwischen dem Frontobjektiv und dem Flüssigkristallmodulator als auch zwischen dem Flüssigkristallmodulator und der lichtempfindlichen Beobachtungs- und/oder Aufzeichnungseinrichtung angeordnet sein.

Weitere Merkmale und Vorteile der vorliegenden Erfindung ergeben sich nicht nur aus den zugehörigen Ansprüchen - für sich und/oder in Kombination - sondern auch aus der nachfolgenden ausführlichen Beschreibung spezieller Ausführungsbeispiele in Verbindung mit den zugehörigen Zeichnungen. In den Zeichnungen, in denen gleiche Bauteile auch gleich gekennzeichnet sind, zeigen:
- Fig. 1: eine als Brille ausgebildete Blendschutzvorrichtung nach dem Stand der Technik zur lokalen Abschwächung von hohen Lichtintensitäten;
- Fig. 2: eine erfindungsgemäße Blendschutzvorrichtung mit einer Zwischenabbildung auf die photoleitende Schicht eines ortsauflösenden ferroelektrischen Flüssigkristallmodulators; und
- Fig. 3: eine erfindungsgemäße Blendschutzvorrichtung mit einer direkten Abbildung auf die CCD-Einrichtung einer Videokamera.

Fig. 1 zeigt in schematischer Darstellung eine Brille nach dem Stand der Technik zur lokalen Abschwächung hoher Lichtintensitäten mittels eines ortsauflösenden ferroelektrischen Flüssigkristallmodulators (PC, LC), der eine halbtransparente photoleitende Schicht (PC) und einen mit dieser Schicht in Kontakt stehenden nachgeschalteten Flüssigkristallfilm (LC) mit helixförmigen smektischen Flüssigkristallen umfaßt und zwischen zwei Polarisatoren (P1, P2) angeordnet ist. Es sei angenommen, daß sich im Sehfeld der Brille ein sehr helles Objekt, wie z.B. die Sonne, und ein relativ schwach belichtetes Objekt, wie z.B. ein Haus oder eine Person befinden, die durch die Brille betrachtet werden. Die beiden Objekte werden durch ein erstes Objektiv (L1) aus einer oder mehreren Linsen nebeneinander auf die photoleitende Schicht (PC) abgebildet. Diese Abbildung wird durch die photoleitende Schicht (PC) in ein Spannungsmuster umgewandelt, das sich auf den Flüssigkristallfilm oder die Flüssigkristallzelle überträgt und diese so umorientiert, daß sie in Verbindung mit den Polarisatoren P1 und P2 für niedrige Lichtintensitäten örtlich transparent wird und für hohe Lichtintensitäten örtlich abgedunkelt.

Dieser Effekt beruht darauf, daß das Licht von schwach belichteten Objekten, wie z.B. das Haus oder die Person, bei einer verdrillten nematischen Flüssigkristallschicht im wesentlichen ungehindert durch die gekreuzten Polarisatoren P1 und P2 hindurchtreten kann. Das auf die Schicht PC fokussierte Licht von stark belichteten Objekten, wie z.B. die Sonne, induziert hingegegen in der Schicht einen lokalen Übergang vom verdrillten zum homeotropen Zustand aufgrund einer extern an den Flüssigkristallmodulator angelegten Spannung. Der Übergang verdrillt-homeotrop vollzieht sich hierbei nur an der Stelle des Flüssigkristallmodulators, an der die Leitfähigkeit des Photoleiters PC aufgrund der starken Beleuchtung durch die Sonne zunimmt, so daß das Licht an dieser Stelle nicht durch den Polarisator P2 hindurchtritt und die Helligkeit des stark belichteten Objektes, d.h. der Sonne, im sich ergebenden Bild stark abgeschwächt ist, ohne daß das Bild hierbei selbst abgedunkelt wird. Dieser Effekt erinnert an die Solarisation bei der Photographie, wo z.B. die Sonne im Bild einer Winterlandschaft dunkel abgebildet wird. In beiden Fällen handelt es sich um einen nichtlinearen optischen Vorgang, der einmal in ferroelektrischen Flüssigkristallen und einmal in Silberhalogeniden stattfindet.

Die Abbildung des Objektfeldes auf der photoleitenden Schicht wird nun im einfachsten Fall mittels einer nachgeschalteten Linse noch einmal abgebildet. Diese zweite Zwischenabbildung ist dann mittels einer weiteren nachgeschalteten Linse mit dem Auge beobachtbar, die so gewählt und angeordnet wird, daß ein beobachtbares, virtuelles, vergrößertes aufrechtes Bild des Objektfeldes entsteht.

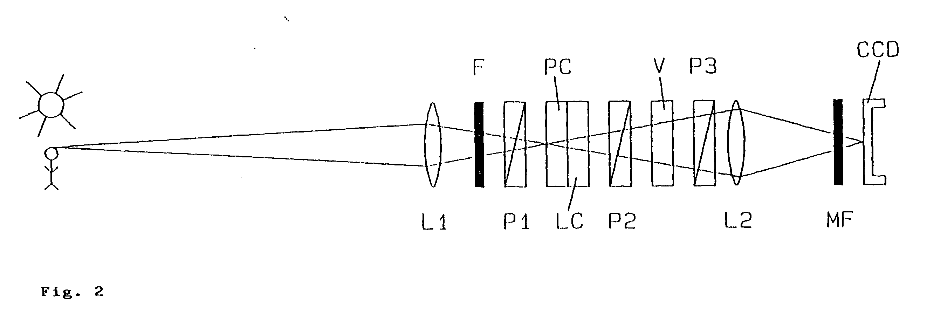

Bei der in Fig. 2 dargestellten erfindungsgemäßen Blendschutzvorrichtung werden die sich im Sehfeld befindenden Objekte, wie z.B. die Sonne und eine Person oder ein Haus, wie bei der eben beschriebenen bekannten Vorrichtung auch zunächst mittels eines ersten Objektivs L1 aus einer oder mehreren Linsen auf die sich im wesentlichen in der Bildebene des Objektivs L1 befindende photoleitende Schicht PC eines Flüssigkristallmodulators der aus dem Stand der Technik bekannten oben beschriebenen Art abgebildet, der wiederum zwischen zwei Polarisatoren P1 und P2 angeordnet ist. Diese Zwischenabbildung des Objektfeldes wird nun erfindungsgemäß unter Verzicht auf die im Stand der Technik erforderliche zweite Zwischenabbildung mittels eines nachgeschalteten zweiten Objektivs L2 direkt oder über eine optische Faserplatte (Lichtleitplatte) auf eine Beobachtungs- und/oder Aufzeichnungseinrichtung CCD abgebildet, bei der es sich im vorliegenden Fall um eine CCD-Farbvideokamera handelt.

Wie oben bereits beschrieben wurde, werden die auf der photoleitenden Schicht PC des Flüssigkristallmodulators PC, LC entstehenden Bilder der Person und der Sonne in Spannungsmuster umgewandelt, die sich auf die nachgeschaltete Flüssigkristallzelle übertragen und den Flüssigkristallfilm so umorientieren, daß er in Verbindung mit den Polarisatoren P1 und P2 für niedrige Lichtintensitäten örtlich transparent wird, während er hohe Lichtintensitäten örtlich abgedunkelt werden.

Da das auf die photoleitende Schicht auftreffende Licht teilweise absorbiert wird, wird es durch ein vorgeschaltetes Farbfilter F so in seinen spektralen Anteilen verändert, daß die CCD-Kamera ein farbgetreues Abbild der Person liefert. Das Farbkorrekturfilter F gleicht somit die Farbverfälschung, durch die Farbtemperatur der Lichtquellen im Objektfeld und durch die Farbabsorbtion des Flüssigkristallmodulators, der Polarisatoren P1 und P2 und der anderen optischen Baugruppen aus. Er muß somit auf die Bauteile der Kamera abgestimmt sein.

Unmittelbar vor der Videokamera ist ein Mosaikfarbfilter MF angeordnet.

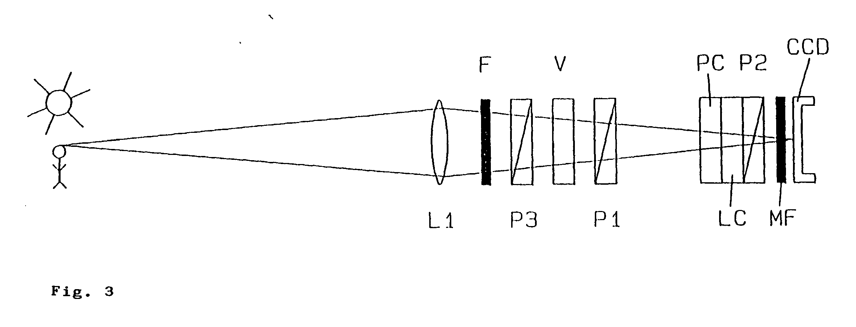

Zwischen dem Flüssigkristallmodulator PC, LC und dem zweiten Objektiv L2 befindet sich ein zwischen dem Polarisator P2 und einem weiteren Polarisator P3 angeordneter schneller ferroelektrischer Flüssigkristallschalter V, der den Strahlengang in dem Moment unterbricht, in dem der Flüssigkristallmodulator PC, LC nicht die gewünschten blendungsvermindernden Eigenschaften besitzt. Ein Schalter oder ein Verschluß V der genannten Art ist beispielsweise aus der obengenannten deutschen Patentanmeldung 196 16 323.4 von L. Beresnev et al. bekannt. Der Verschluß V kann auch als anderer elektrooptischer oder elektromechanischer Verschluß oder Schalter ausgebildet sein, wie sie aus dem Stand der Technik bekannt sind. Der Verschluß V kann auch an einer anderen Stelle des optischen Systems, wie z.B. zwischen dem ersten Objektiv L1 und dem Flüssigkristallmodulator PC, LC angeordnet sein, so wie dies bei der in Fig. 3 dargestellten erfindungsgemäßen Ausführungsform der Fall ist.

Die in den Fig. 1 und 2 dargestellte Zwischenabbildung auf die photoleitende Schicht PC des Flüssigkristallmodulators PC, LC ist bei Videokameras nicht unbedingt erforderlich, da man sich bei ihnen im Gegensatz zum Auge bis auf wenige Mikrometer der lichtempfindlichen Ebene der Videokamera, d.h. dem CCD-Kamerachip, nähern kann, obgleich diese Zwischenabbildung auch bei Videokameras zum Zwecke der Vergrößerung von Vorteil sein kann.

Eine entsprechende erfindungsgemäße Ausführungsvariante ohne Zwischenabbildung ist in Fig. 3 dargestellt, bei der das gesamte Paket aus dem Flüssigkristallmodulator PC, LC, dem nachgeschalteten Polarisator P2 und dem Mosaikfilter MF in großer Nähe vor der lichtempfindlichen Schicht CCD angeordnet ist, während sich der wiederum zwischen zwei Polarisatoren P3 und P2 angeordnete Verschluß V zwischen dem abbildenden Objektiv L1 und der photoleitenden Schicht PC des Flüssigkristallmodulators PC, LC befindet.

Die Abbildung der sich im Sehfeld befindenden Objekte erfolgt in diesem Fall direkt auf die im wesentlichen in der Bildebene des Objektivs L1 angeordnete CCD-Schicht, ohne daß hierzu wie bei der in Fig. 2 dargestellten erfindungsgemäßen Ausführungsform eine Zwischenabbildung auf die photoleitende Schicht PC des Flüssigkristallmodulators PC, LC oder gar eine weitere Zwischenabbildung wie im Stand der Technik erfolderlich wäre. Das Bild der Sonne auf der photoleitenden Schicht PC ist dann zwar nicht ganz scharf, dies ist jedoch unerheblich, da es ohnehin unterdrückt wird. Diese erfindungsgemäße Anordnung besitzt damit sogar den Vorteil, daß helle Störlichtquellen und Hintergründe nicht nur abgedunkelt sondern auch verwaschen dargestellt werden.

Wie bereits erwähnt wurde, ist hierdurch die Baulänge gegenüber einer Blendschutzvorrichtung mit Zwischenabbildung erheblich reduziert, da das Objektiv L2 ersatzlos entfällt. Da es sich hierbei üblicherweise um ein hochwertiges und teueres Objektiv handelt, ergibt sich für das erfindungsgemäße optische System gemäß Fig. 3 nicht nur ein zusätzlicher merklicher Gewichtsvorteil sondern auch ein zusätzlicher erheblicher Preisvorteil im Vergleich zu der erfindungsgemäßen Ausführungsvariante gemäß Fig. 2, die ja bereits kompakter, kostengünstiger und leichter ist als die aus dem Stand der Technik bekannte Blendschutzvorrichtung gemäß Fig. 1.

## Patentansprüche

1. Vorrichtung zur lokalen Abschwächung der Lichtintensität im Sehfeld einer lichtempfindlichen Beobachtungs- und/oder Aufzeichnungseinrichtung (CCD) mit einem ersten Objektiv (L1) aus einer oder mehreren Linsen und einem zwischen zwei Polarisatoren (P1, P2) angeordneten ortsauflösenden ferroelektrischen Flüssigkristallmodulator (PC, LC), der eine photoleitende Schicht (PC) und eine mit dieser Schicht in Kontakt stehende nachgeschaltete Flüssigkristallzelle (LC) mit helixförmigen smektischen Flüssigkristallen umfaßt und so angeordnet ist, daß sich die photoleitende Schicht (PC) in der Bildebene des ersten Objektivs (L1) befindet,
wobei das Bildfeld des ersten Objektivs (L1) durch ein zweites Objektiv (L2) aus einer oder mehreren Linsen auf die Beobachtungs- und/oder Aufzeichnungseinrichtung (CCD) abgebildet wird,
**gekennzeichnet durch**
einen Farbkorrekturfilter (F) zur Ausgleichung der Farbverfälschung **durch** die Farbtemperatur der Lichtquellen im Objektfeld und die Farbabsorbtion **durch** die optischen Bauelemente.

2. Vorrichtung zur lokalen Abschwächung der Lichtintensität im Sehfeld einer lichtempfindlichen Beobachtungs -und/oder Aufzeichnungseinrichtung (CCD) mit einem Objektiv (L1) aus einer oder mehreren Linsen und einem zwischen zwei Polarisatoren (P1, P2) im Strahlengang des Objektivs angeordneten ortsauflösenden ferroelektrischen Flüssigkristallmodulator (PC, LC), der eine photoleitende Schicht (PC) und eine mit dieser Schicht in Kontakt stehende nachgeschaltete Flüssigkristallzelle (LC) mit helixförmigen smektischen Flüssigkristallen umfaßt,
wobei die Beobachtungs- und/oder Aufzeichnungseinrichtung (CCD) mit vorgeschaltetem Flüssigkristallmodulator (PC, LC) in der Bildebene des Objektivs (L1) angeordnet ist, **gekennzeichnet durch** einen Farbkorrekturfilter (F) zur Ausgleichung der Farbverfälschung **durch** die Farbtemperatur der Lichtquellen im Objektfeld und die Farbabsorbtion **durch** die optischen Bauelemente.

3. Vorrichtung nach Anspruch 2,
**gekennzeichnet durch** eine zwischen dem Flüssigkristallmodulator (PC, LC) und der Beobachtungs -und/oder AUFZEICHNUNGSEINRICHTUNG (CCD) angeordnete optische Faserplatte.

4. Vorrichtung nach einem der Ansprüche 1 bis 3,**dadurch gekennzeichnet,daß** der lichtempfindlichen Beobachtungs- und/oder Aufzeichnungseinrichtung (CCD) ein Mosaikfarbfilter (MF) vorgeschaltet ist.

5. Vorrichtung nach einem der Ansprüche 1 bis 4, **gekennzeichnet durch** einen optischen Verschluß (V) zur Unterbrechung des Strahlengangs, wenn der Flüssigkristallmodulator (PC, LC) nicht die gewünschten blendungsmindernden Eigenschaften aufweist.

6. Vorrichtung nach Anspruch 5,
**dadurch gekennzeichnet,**
**daß** der Verschluß (V) als schneller ferroelektrischer Flüssigkristallschalter oder als anderer elektrooptischer oder elektromechanischer Schalter ausgebildet ist.

7. Vorrichtung nach Anspruch 5 oder 6,**dadurch gekennzeichnet,daß** der Verschluß (V) als schaltbare Retardierungsplatte ausgebildet ist.

8. Vorrichtung nach einem der Ansprüche 5 bis 7, **dadurch gekennzeichnet,**
**daß** der Verschluß (V) zwischen zwei Polarisatoren (P3, P1; P2, P3) angeordnet ist.

## Claims

1. Device for local attenuation of the light intensity in the field of view of a light-sensitive observation and/or recording device (CCD) having a first objective (L1) comprised of one or more lenses, and having, located between two polarizers (P1, P2), a position-resolving ferroelectric liquid-crystal modulator (PC, LC) that includes a photoconductive layer (PC) and, standing in contact with said layer, a subsequent liquid-crystal cell (LC) with helical smectic liquid crystals, said modulator being arranged such that the photoconductive layer (PC) is located in the image plane of the first objective (L1), wherein the image field of the first objective (L1) is projected onto the observation and/or recording device (CCD) by a second objective (L2) comprised of one or more lenses, **characterized by** a color-correction filter (F) for compensating the color distortion resulting from the color temperature of the light sources in the object field and the color absorption by the optical components.

2. Device for local attenuation of the light intensity in the field of view of a light-sensitive observation and/or recording device (CCD) having an objective (L1) comprised of one or more lenses, and having, located between two polarizers (P1, P2) in the beam path of the objective, a position-resolving ferroelectric liquid-crystal modulator (PC, LC) that includes a photoconductive layer (PC) and, standing in contact with said layer, a subsequent liquid-crystal cell (LC) with helical smectic liquid crystals, wherein the observation and/or recording device (CCD) and the preceding liquid-crystal modulator (PC, LC) are located in the image plane of the objective (L1), **characterized by** a color-correction filter (F) for compensating the color distortion resulting from the color temperature of the light sources in the object field and the color absorption by the optical components.

3. Device according to claim 2, **characterized by** a fiber-optic plate located between the liquid-crystal modulator (PC, LC) and the observation and/or RECORDING DEVICE (CCD).

4. Device according to any one of claims 1 through 3, **characterized in that** the light-sensitive observation and/or recording device (CCD) is preceded by a mosaic color filter (MF).

5. Device according to any one of claims 1 through 4, **characterized by** an optical shutter (V) for interrupting the beam path if the liquid-crystal modulator (PC, LC) does not have the desired glare-reducing properties.

6. Device according to claim 5, **characterized in that** the shutter (V) is embodied as a fast ferroelectric liquid-crystal switch or as another electro-optical or electromechanical switch.

7. Device according to claim 5 or 6, **characterized in that** the shutter (V) is designed as a switchable retarder plate.

8. Device according to any one of claims 5 through 7, **characterized in that** the shutter (V) is located between two polarizers (P3, P1; P2, P3).

## Revendications

1. Dispositif d'affaiblissement local de l'intensité lumineuse dans le champ de vue d'un système d'observation et/ou d'enregistrement (CCD) photosensible comportant un premier objectif (L1) constitué d'une ou de plusieurs lentilles et un modulateur à cristaux liquides (PC, LC) ferroélectrique à résolution locale disposé entre deux polarisateurs (P1, P2) comprenant une couche photoconductrice (PC) et, en aval de celle-ci, une cellule à cristaux liquide (LC) de type smectique hélicoïdal qui est en contact avec ladite couche, et disposé de manière telle que la couche photoconductrice (PC) se trouve dans le plan de l'image du premier objectif (L1), le champ d'image du premier objectif (L1) étant projeté, par un second objectif (L2) constitué d'une ou de plusieurs lentilles, sur le système d'observation et/ou d'enregistrement (CCD),
**caractérisé par**
un filtre correcteur de couleur (F) destiné à compenser la contamination de la couleur due à la température de couleur des sources lumineuses dans le champ de l'objet et à l'absorption de couleur par les composants optiques.

2. Dispositif d'affaiblissement local de l'intensité lumineuse dans le champ de vue d'un système d'observation et/ou d'enregistrement (CCD) photosensible comportant un objectif (L1) constitué d'une ou de plusieurs lentilles et un modulateur à cristaux liquides (PC, LC) ferroélectrique à résolution locale disposé entre deux polarisateurs (P1, P2) dans le trajet des rayons de l'objectif et comprenant une couche photoconductrice (PC) et, en aval de celle-ci, une cellule à cristaux liquides (LC) de type smectique hélicoïdal qui est en contact avec ladite couche, le système d'observation et/ou d'enregistrement (CCD) doté, en amont, du modulateur à cristaux liquides (PC, LC) étant disposé dans le plan de l'image de l'objectif (L1),
**caractérisé par** un filtre correcteur de couleur (F) destiné à compenser la contamination de la couleur due à la température de couleur des sources lumineuses dans le champ de l'objet et à l'absorption de couleur par les composants optiques.

3. Dispositif selon la revendication 2,
**caractérisé par** une plaque de fibres optiques disposée entre le modulateur à cristaux liquides (PC, LC) et le système d'observation et/ou d'enregistrement (CCD).

4. Dispositif selon l'une des revendications 1 à 3, **caractérisé en ce qu'**un filtre de couleur mosaïque (MF) est prévu en amont du système d'observation et d'enregistrement (CCD) photosensible.

5. Dispositif selon l'une des revendications 1 à 4,
**caractérisé par**
un obturateur optique (V) destiné à interrompre le trajet des rayons lorsque le modulateur à cristaux liquides (PC, LC) ne présente pas les caractéristiques réductrices d'éblouissement souhaitées.

6. Dispositif selon la revendication 5,
**caractérisé en ce que**
l'obturateur (V) est réalisé sous la forme d'un interrupteur rapide à cristaux liquides ferroélectrique ou d'un autre type d'interrupteur électro-optique ou électromécanique.

7. Dispositif selon la revendication 5 ou 6, **caractérisé en ce que** l'obturateur (V) est réalisé sous la forme d'une plaque de retardement commutable.

8. Dispositif selon l'une des revendications 5 à 7, **caractérisé en ce que**
l'obturateur (V) est disposé entre deux polarisateurs (P3, P1; P2, P3).
